# EUROPÄISCHE PATENTSCHRIFT

(11) **EP 4 099 524 B1**
(45) Veröffentlichungstag und Bekanntmachung des Hinweises auf die Patenterteilung: **08.10.2025**
(21) Anmeldenummer: 22177167.8
(22) Anmeldetag: 03.06.2022
(51) Int. Cl.: H02G 1/02, H02G 7/00

(54) **SIGNALKÖRPER**
SIGNAL BODY
CORPS SIGNALÉTIQUE

(30) Priorität: 04.06.2021 AT 5011721 U
(43) Veröffentlichungstag der Anmeldung: 07.12.2022
(73) Patentinhaber: MS Design GmbH, 6426 Roppen (AT)
(72) Erfinder: SANTER, Manuel, 6426 Roppen (AT)
(74) Vertreter: Torggler & Hofmann Patentanwälte - Innsbruck

(56) Entgegenhaltungen:
- EP-A1- 0 880 211
- CN-A- 108 629 931
- DE-B4- 102016 215 165
- US-A- 4 779 794
- US-A- 5 224 440

## Beschreibung

Die vorliegende Erfindung betrifft einen Signalkörper, insbesondere eine Signalkugel, mit den Merkmalen des Oberbegriffs des Anspruchs 1.

Gattungsgemäße Signalkörper werden an Freiseilen, wie beispielsweise Freileitungen, Hochspannungsleitungen und/oder Oberleitungen, befestigt, um dieselben für den Luftverkehr und dergleichen sichtbar zu machen.

Sie weisen zwei Halbschalen und zwei Scharniere auf, wobei die Halbschalen so mit den Scharnieren verbunden sind, dass die Halbschalen in einer geöffneten Stellung teilweise ineinander verschwenkt sind und in einer geschlossenen Stellung das Freiseil, vorzugsweise im Wesentlichen achsensymmetrisch, umschließen.

Zweierlei technische Anforderungen sind für Signalkörper entscheidend. Erstens müssen die Signalkörper in dem Sinn sicher sein, dass sie bei Beschädigungen beispielsweise durch Felsstürze sichtbar bleiben und vor dem Abstürzen gesichert sind.

Zweitens müssen die Signalkörper einfach zu montieren sein, da sie meist in großer Höhe anzubringend sind. In vielen Fällen erfordert dies den Einsatz eines Hubschraubers, sodass die Kosten und Sicherheit der Montage entscheidend von einer kurzen Montagezeit abhängen.

In der DE 102016215165 A1 ist eine Signalkugel offenbart, die für sich in Anspruch nimmt, durch ein Absturzsicherungselement in Form einer Öse gegen Abstürze sicherbar und einfach montierbar zu sein.

In Bezug auf die Absturzsicherung mag dies zutreffen. Die Montierbarkeit gestaltet sich in der Praxis allerdings nicht so einfach, wie dies in der DE 102016215165 A1 suggeriert wird.

Dies liegt erstens daran, dass die dort offenbarte Signalkugel eine Federbelastung in Richtung auf die geschlossene Stellung der Halbschalen aufweist. Zweitens ist eine Haltevorrichtung offenbart, welche die Halbschalen während der Montage gegen die Wirkung der Federbelastung in einer geöffneten Stellung halten soll. Allerdings ist den Figuren zu entnehmen, dass die "geöffnete Stellung", in der die Haltevorrichtung die Halbschalen hält, es nicht erlaubt, das Freiseil zwischen die Halbschalen einzubringen, weil die Stellung nicht geöffnet genug ist. Die vom Hubschrauber herabhängende Montageperson muss also gleichzeitig Kraft aufwenden, um die Signalkugel gegen die Wirkung der Federbelastung geöffnet zu halten und dieselbe gleichzeitig um die Freileitung herum platzieren.

Weitere Signalkugeln des Standes der Technik sind aus der EP 088211 A1, der US 5224440 A, der CN 108629931 A, der CH 579838 A5, der DE 102018106316 A1, der US 5224440 A, der DE 2735648 A, der WO 96/02077 A1, der EP 0418751 A2 sowie der EP 0486744 B1 bekannt.

Aufgabe der vorliegenden Erfindung ist es, einen Signalkörper bereitzustellen, der hinsichtlich einer einfacheren Montage und/oder einer erhöhten Sicherheit verbessert ist.

Diese Aufgabe wird durch die Merkmale des Anspruchs 1 gelöst, nämlich indem zumindest ein Anschlag vorgesehen ist, der ausgehend von der geöffneten Stellung eine weitere Öffnungsbewegung der Halbschalen hemmt.

Erfindungsgemäß ist der Signalkörper von der Gewichtsverteilung her so ausgelegt, dass er in der geöffneten Stellung auf das Freiseil gelegt werden kann und sich dort selbst ausbalanciert, also von der montierenden Person nicht aktiv auf dem Freiseil gehalten werden muss. Der Signalkörper kann dann ganz einfach in die geschlossene Stellung verbracht und verriegelt werden.

Während der Montage sollte sich der Signalkörper einerseits so wenig wie möglich von selbst bewegen, d.h. öffnen oder schließen, weil dies die montierende Person selbstverständlich behindert. Andererseits soll der Signalkörper auch einfach zu schließen sein, um der montierenden Person so schnell wie möglich zu erlauben, die Montage abzuschließen, sobald der Signalkörper in der korrekten Position um das Freiseil herum angeordnet ist.

Eine zentrale überraschende Erkenntnis der Erfindung ist es, dass diese sich scheinbar widersprechenden Anforderungen durch die normale in den Scharnieren vorhandene Reibung mit einem guten Kompromiss erfüllt werden. Es ist lediglich dafür Sorge zu tragen, dass, keine zu großen Öffnungswinkel der Halbschalen zueinander entstehen, während die montierende Person den Signalkörper über dem Freiseil platziert. Überaschenderweise ist deshalb der erfindungsgemäße Anschlag in Verbindung mit den Scharnieren, die ein Verschwenken der Halbschalen ineinander erlauben, ein einfaches und effektives Mittel um die einfache Montierbarkeit des Signalkörpers zu erlauben.

Im montierten Zustand kann das Freiseil den Signalkörper vorzugsweise achsensymmetrisch (in Bezug auf die Achse des Freiseils) durchstoßen.

Der Signalkörper kann, wie erwähnt, besonders bevorzugt eine Signalkugel sein.

Erfindungsgemäß sind die Halbschalen mittels der Scharniere vor der Montage fix vormontiert. Auch dies ist der schnellen Montage zuträglich, weil der Signalkörper "zusammenhängt".

Im Auslieferungszustand können die Halbschalen trotzdem separat geliefert werden. Wichtig ist, dass die Halbschalen mittels der Scharniere vor der Montage (also beispielsweise bevor der Hubschrauber abhebt) vormontierbar sind.

Der Signalkörper kann besonders bevorzugt ein Hohlkörper sein, der im Inneren der Halbschalen im Wesentlichen hohl ist, gegebenenfalls mit der Ausnahme von Befestigungsvorrichtungen und natürlich dem Freiseil selbst.

Ausführungsformen, wobei der Signalkörper innen zumindest teilweise ausgefüllt ist (also beispielsweise "dicke" Halbschalen), sind aber natürlich prinzipiell denkbar.

Es versteht sich, dass prinzipiell auch mehr als zwei Halbschalen und/oder mehr als zwei Scharniere vorgesehen sein könnten. Bevorzugt können aber Ausführungen sein, wobei genau zwei Halbschalen und/oder genau zwei Scharniere realisiert sind.

Weitere Vorteile und Einzelheiten der Erfindung sind in den abhängigen Ansprüchen definiert.

Der zumindest eine Anschlag kann in den Scharnieren integriert sein, wobei vorzugsweise zwei Anschläge vorgesehen sind, die jeweils in eines der Scharniere integriert sind.

Bevorzugt können die Halbschalen durch die Scharniere zwischen der geöffneten Stellung und der geschlossenen Stellung zueinander frei schwenkbar sein. Zu bemerken ist, dass die Halbschalen in der geöffneten Stellung und/oder der geschlossenen Stellung festlegbar oder arretierbar sein können. Gemeint ist, dass die Halbschalen in den Stellungen dazwischen frei schwenkbar sein kann und beispielsweise nicht einer Federbelastung unterliegen.

Alternativ könnten die Halbschalen auch gerastert zwischen der geöffneten Stellung und der geschlossenen Stellung zueinander verschwenkbar sein. Bevorzugt können aber Ausführungsformen mit freier Schwenkbarkeit sein.

Zum Arretieren/Verriegeln der Halbschalen in der geschlossenen Stellung kann zumindest ein Schnellverschluss vorgesehen ist, der aufweist:
- ein an einem ersten Teil der Scharniere schwenkbar befestigten Riegel mit einer Riegelfläche und
- eine an einem relativ zum ersten Teil des Scharniers schwenkbaren zweiten Teil der Scharniere angeordnete Riegelaufnahme, wobei die Halbschalen durch Einschwenken des Riegels in die Riegelaufnahme und Zusammenwirken der Riegelfläche mit der Riegelaufnahme in der geschlossenen Stellung arretierbar sind.

Schnellverschlüsse dieser Form können die Montagezeit noch einmal signifikant verkürzen, da keine Zeit mit dem Arrangieren einer Verschraubung aufgewendet werden muss.

Die Riegelfläche kann federbelastet sein und/oder die Riegelaufnahme kann als Leiste mit einer Leistenausnehmung zum Einschwenken des Riegels ausgebildet sein, wobei die Leistenausnehmung eine geringere Größe, insbesondere einen geringeren Durchmesser, als die Riegelfläche aufweist.

Bevorzugt können zwei Schnellverschlüsse (jeweils mit den oben erwähnten Merkmalen) vorgesehen sein, die jeweils an einem der Scharniere angeordnet sind.

Die Riegel der Schnellverschlüsse können bevorzugt als Schrauben ausgebildet sein, die mit ihrem Gewinde mit einem schwenkbaren Teil in Eingriff stehen.

Die Federbelastung der Riegelfläche kann beispielsweise durch eine Feder (vorzugsweise Schraubenfeder) realisiert sein.

Das Zusammenwirken der Riegelfläche mit der Riegelaufnahme kann durch die Wirkung der Federbelastung geschehen und durch Eindrehen des Riegels in Form der Schraube verstärkt werden, sodass letztendlich eine zuverlässige Verschraubung vorliegt.

Demgemäß können die hier beschriebenen Schnellverschlüsse als Vorrichtungen aufgefasst werden, die einer montierenden Person besonders schnell das Arrangieren der Verschraubung erlauben.

Es kann bevorzugt eine Befestigungsvorrichtung zum Festlegen der Halbschalen durch Reibschluss in der geöffneten Stellung vorgesehen sein, wobei der Reibschluss zum Verbringen der Halbschalen in die geschlossene Stellung durch einen Bediener überwindbar ist.

Auch dies kann der verkürzten und vereinfachten Montage des Signalkörpers zuträglich sein, indem der Signalkörper mit leichtem Widerstand in der geöffneten Stellung verharrt, bis die montierende Person den Signalkörper um das Freiseil platziert hat. Durch Überwinden des leichten Widerstands schließt sich der Signalkörper leicht und schnell und muss dann nur noch verriegelt werden.

Die Befestigungsvorrichtung kann am ersten Teil der Scharniere eine Lasche und am zweiten Teil der Scharniere eine mit der Lasche korrespondierende Ausnehmung aufweisen, wobei der Reibschluss durch Einschwenken der Lasche in die korrespondierende Ausnehmung entsteht.

Die Halbschalen können aus einem in einer Signalfarbe, vorzugsweise Orange, wie etwa RAL 2011, eingefärbten Kunststoff gefertigt sein. Die Halbschalen sind also bevorzugt komplett durchgefärbt. Selbst bei Beschädigung der Oberfläche der Halbschalen, beispielsweise durch Steinschlag, bleibt so die Signalwirkung erhalten, weil ein durch die Beschädigung (beispielsweise einen Kratzer) freigelegter Kunststoffteil schlicht die gleiche Signalfarbe aufweist - anders als beispielsweise bei einem lackierten oder pulverbeschichteten Kunststoff anderer Farbe.

Die Scharniere können im Inneren des Signalkörpers über zumindest einer Strebe in Verbindung stehen. Da auch Signalkugeln mit relativ großem Durchmesser verwendet werden, können Streben zur Stabilisierung von Vorteil sein.

Weitere Vorteile und Einzelheiten ergeben sich aus den Figuren sowie der dazu gehörigen Figurenbeschreibung. Dabei zeigen:
- Fig. 1a und 1b: Seitendarstellungen einer ersten Ausführungsform der Erfindung in der geschlossenen und der geöffneten Stellung,
- Fig. 2a und 2b: Schnittdarstellungen der ersten Ausführungsform,
- Fig. 3 und 4: weitere Schnittdarstellungen der ersten Ausführungsform,
- Fig. 5a und 5b: Seitendarstellungen einer zweiten Ausführungsform der Erfindung in der geschlossenen und der geöffneten Stellung,
- Fig. 6a und 6b: Schnittdarstellungen der zweiten Ausführungsform,
- Fig. 7, 8 und 9: Detaildarstellungen der ersten und zweiten Ausführungsform,
- Fig. 10a und 10b: perspektivische Darstellungen der ersten Ausführungsform im montierten Zustand und eines Scharniers,
- Fig. 11a und 11b: eine perspektivische und eine Explosionsdarstellung der ersten Ausführungsform sowie
- Fig. 12a und 12b: eine perspektivische und eine Explosionsdarstellung der zweiten Ausführungsform.

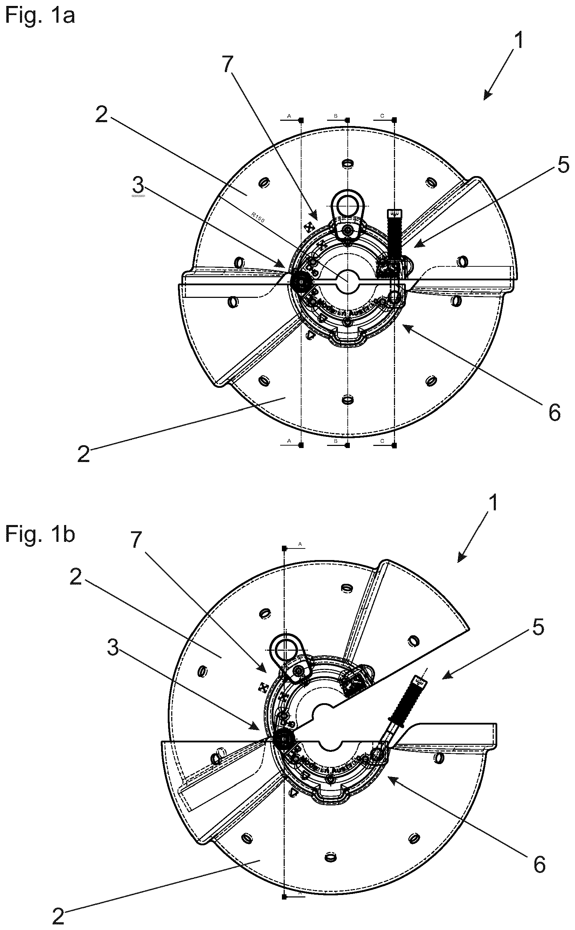

Fig. 1a und 1b zeigen eine erste Ausführungsform eines erfindungsgemäßen Signalkörpers 1 - in diesem Fall eine Signalkugel - in einer Seitenansicht, wobei Fig. 1a die geschlossene Stellung darstellt.

Der Signalkörper 1 beinhaltet zwei Halbschalen 2, die über zwei Scharniere 3 aneinander schwenkbar gelagert sind.

Die Halbschalen 2 besitzen die Grundform einer hohlen Halbkugel, wobei eine Radiusveränderung vorgesehen ist, sodass die Halbschalen 2 ineinander verschwenkt werden können, was bei der in Fig. 1b dargestellten geöffneten Stellung des Signalkörpers 1 zu erkennen ist.

Die Halbschalen 2 sind aus orange gefärbtem Kunststoff durch Tiefziehen oder Spritzgießen hergestellt. Selbst wenn die Halbschalen 2 beispielsweise durch Steinschlag beschädigt werden, kann die orange Signalfarbe erhalten bleiben, weil Kratzer oder dergleichen zwar unterhalb der Oberfläche liegenden Kunststoff freilegen, dieser aber ebenfalls orange gefärbt ist. Es ergibt sich im Vergleich zu lackierten Halbschalen also ein entscheidender Vorteil.

Der Kunststoff ist dabei so ausgelegt, dass eventuelle Transponder (in der Zukunft) unter keiner Abschirmung leiden und normale Signale empfangen oder gesendet werden können.

Die Scharniere 3 weisen ein erstes Teil 6 und ein zweites Teil 7 auf, welche jeweils mit einer der Halbschalen 2 verbunden sind, und über eine (gedachte oder physische) Schwenkachse, die sich aus dem Vergleich der Figuren 1a und 1b ergibt, relativ zueinander verschwenkbar sind.

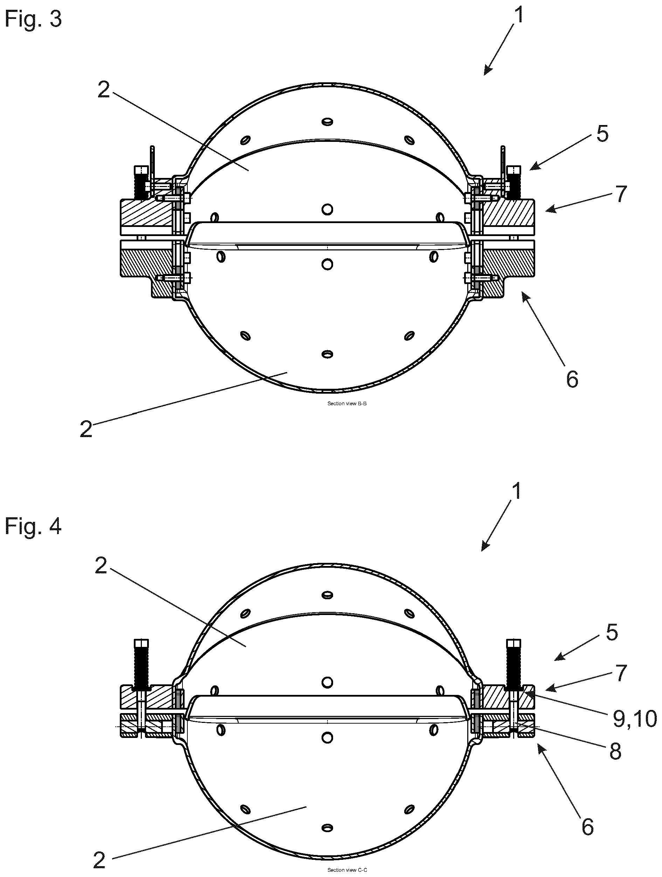

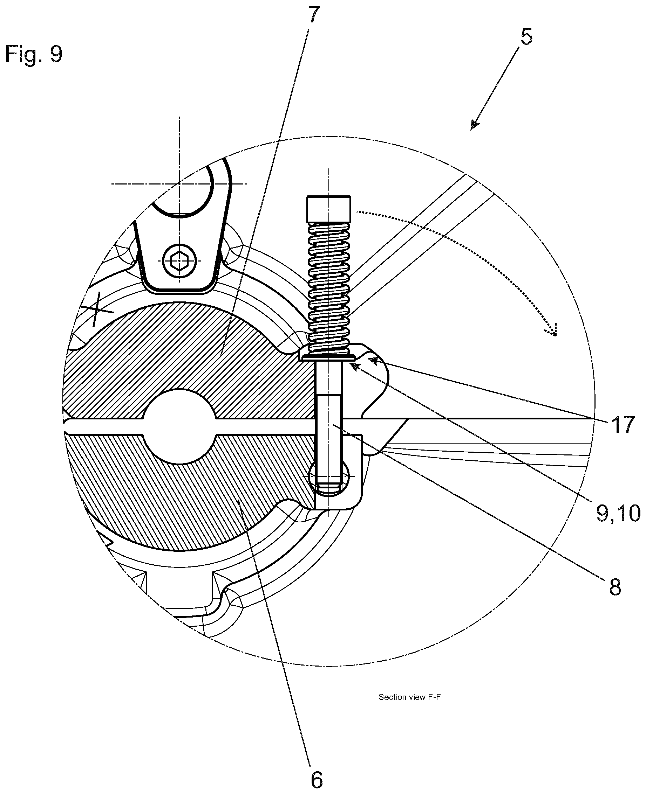

Es ist beidseitig jeweils ein Schnellverschluss 5 vorhanden, der im Zusammenhang mit den Figuren 4 und 9 noch näher erläutert wird.

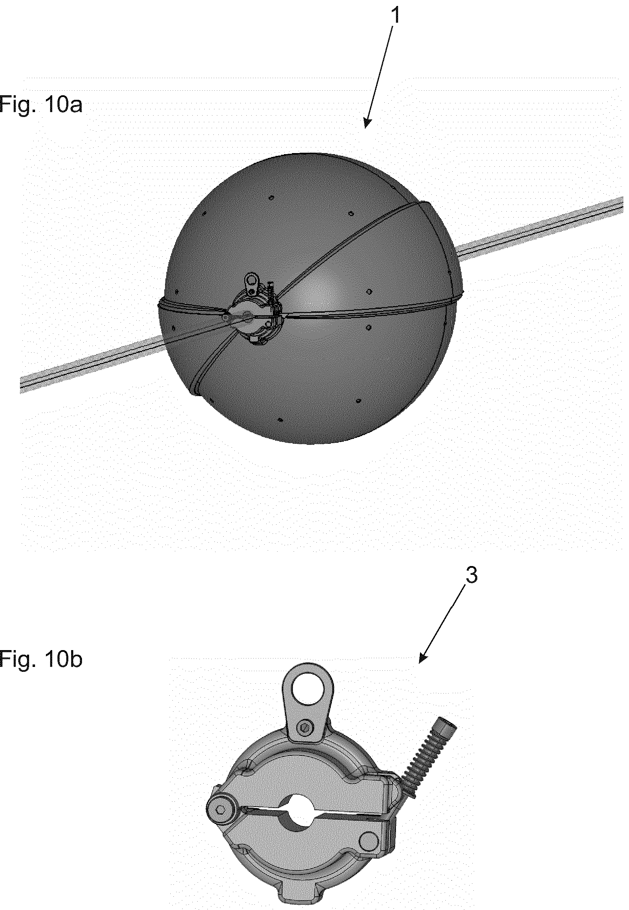

In diesem Ausführungsbeispiel besitzen das erste Teil 6 und das zweite Teil 7 der Scharniere 3 die Grundform einer Halbkreisscheibe (können auch als Haltebacken bezeichnet werden) mit einer zentralen Öffnung für das Freiseil (siehe dazu Fig. 10a).

Zusätzlich ist eine Öse für eine Absturzsicherung vorhanden.

In den Haltebacken 2 kann ein Schutz für das Freiseil vorgesehen sein (nicht dargestellt). Im Stand der Technik war zum Schutz des Freiseils eine Spirale notwendig, die um das Freiseil zu winden war. Dies kann somit entfallen und die Montage kann weiter verkürzt werden.

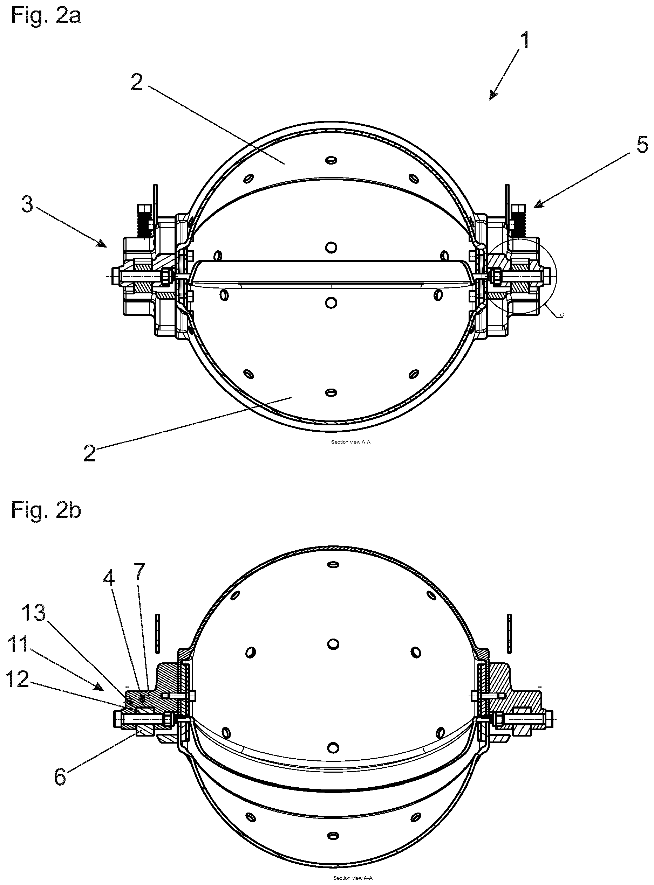

Fig. 2a zeigt einen Schnitt durch die Ebene A-A in Fig. 1a (geschlossene Stellung) und Fig. 2b zeigt einen Schnitt durch die äquivalente Ebene A-A in Fig. 1b (geöffnete Stellung), sodass das Innenleben der Scharniere 3, insbesondere die Schwenkachse, zu erkennen ist.

Zu erwähnen ist, dass die hier gezeigten Ausführungsbeispiele generell symmetrisch sind. Der Übersichtlichkeit halber wurden Bezugszeichen aber nicht immer auf beiden Seiten eingezeichnet.

In Fig. 2b ist zu erkennen, wie der erfindungsgemäße Anschlag 4 funktioniert. Dieser ist in diesem Ausführungsbeispiel an einer Lasche 12 am ersten Teil 6 der Scharniere 3 angeordnet. Die Lasche 12 bewegt sich beim Bewegen des Signalkörpers 1 in die geöffnete Stellung in eine komplementär geformte Ausnehmung 13 am zweiten Teil 7 der Scharniere 3. Der Anschlag 4 schlägt im Inneren der Ausnehmung 13 an und verhindert so eine weitere Öffnungsbewegung, wenn die geöffnete Stellung erreicht ist.

Gleichzeitig bleiben die Halbschalen 2 vor dem Erreichen der geöffneten Stellung relativ zueinander frei schwenkbar. Dadurch wird im Vergleich zum Stand der Technik eine besonders einfache Montage des Signalkörpers 1 am Freiseil erreicht, weil die montierende Person nicht ständig Kraft aufwenden muss, um den Signalkörper in der geöffneten Stellung zu halten. Der Signalkörper 1 kann so mit einer Hand um das Freiseil positioniert werden und mit der anderen Hand geschlossen werden.

Des Weiteren wird durch die komplementäre Ausbildung der Lasche 12 und der Ausnehmung 13 in der geöffneten Stellung ein Reibschluss erreicht, der den Signalkörper 1 in der geöffneten Stellung festhält, was den vorerwähnten Vorteil der vereinfachten Montage noch vergrößert. Durch den Reibschluss wird verhindert, dass die montierende Person den Signalkörper 1 aus Versehen schließt. Kleinere Einwirkungen auf den Signalkörper 1 sind nämlich insbesondere bei der Montage mittels Hubschrauber unvermeidbar.

Gleichzeitig kann der Reibschluss von der bedienenden Person leicht überwunden werden, wenn der Signalkörper korrekt positioniert ist. Durch Schließen und Verriegeln (siehe dazu die nachstehende Beschreibung des Schnellverschlusses) des Signalkörpers 1 ist die Montage dann schon beendet.

Fig. 3 zeigt einen Schnitt durch die Ebene B-B in Fig. 1a.

Fig. 4 zeigt einen Schnitt durch die Ebene C-C in Fig. 1a, wobei insbesondere die Funktionsweise der Schnellverschlüsse 5 deutlich wird.

Der Riegel 8 ist schwenkbar am ersten Teil 6 der Scharniere 3 gelagert.

Der Riegel 8 weist eine Schraube, eine Feder sowie eine Riegelfläche 9 auf. Das Gewinde steht mit einem schwenkbaren Element am ersten Teil 6 der Scharniere 3 im Eingriff. Abstützend am Schraubenkopf erzeugt die Feder eine Federvorspannung auf die Riegelfläche 9 und die Riegelaufnahme 10. Der Riegel 8 könnte deshalb auch als Klemmeinheit bezeichnet werden.

Im vorliegend dargestellten geschlossenen und verriegelten Zustand steht die Riegelfläche 9 in Zusammenwirkung mit der Riegelaufnahme 10 (die deshalb mit dem gleichen Pfeil versehen sind). Dadurch wird das Öffnen des Signalkörpers 1 verhindert.

Durch weiteres Anziehen der Schraube kann die Verriegelungswirkung verstärkt werden, indem die Federvorspannung der Riegelfläche 9 auf die Riegelaufnahme 10 vergrößert wird.

Außerdem wirkt die Feder einem unerwünschten Setzverhalten der Schraube und der Riegelaufnahme 10 entgegen.

Im Übrigen ist der Schnellverschluss 5 auch in Fig. 9 gut erkennbar.

Sobald der Signalkörper 1 also um das Freiseil herumgelegt ist und geschlossen ist, müssen nur die Riegel 8 der Schnellverschlüsse 5 in die verriegelte Position gebracht werden. Optional können die erwähnten Schrauben noch angezogen werden, um eine straffere Verriegelung zu erreichen.

Im Übrigen ist der Signalkörper 1 von der Gewichtsverteilung her so ausgelegt, dass er in der geöffneten Stellung auf das Freiseil gelegt werden kann und sich dort selbst ausbalanciert, also von der montierenden Person nicht aktiv auf dem Freiseil gehalten werden muss. Der Signalkörper 1 kann dann ganz einfach in die geschlossene Stellung verbracht und verriegelt werden.

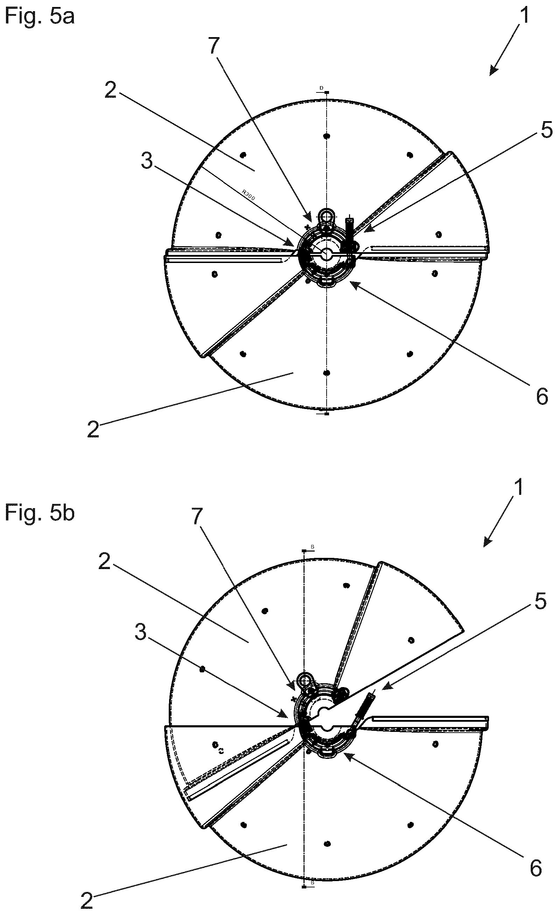

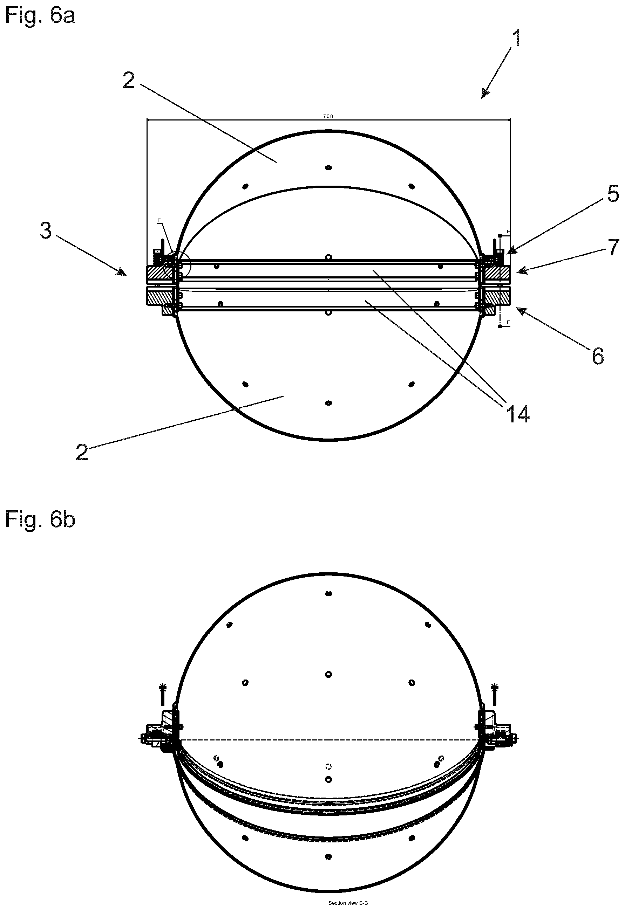

Die Figuren 5a, 5b, 6a und 6b zeigen ein weiteres Ausführungsbeispiel eines erfindungsgemäßen Signalkörpers 1, der vom Grundsatz her analog zum ersten Ausführungsbeispiel aufgebaut ist, aber über einen doppelt so großen Durchmesser verfügt.

Fig. 5a entspricht Fig. 1a (geschlossene Stellung), Fig. 5b entspricht Fig. 1b (geöffnete Stellung), Fig. 6a entspricht Fig. 2a und Fig. 6b entspricht Fig. 2b.

Da der Signalkörper 1 gemäß dem zweiten Ausführungsbeispiel einen größeren Durchmesser aufweist, sind Streben 14 (könnten auch als Koppelstangen bezeichnet werden) vorgesehen, die zwischen den ersten Teilen 6 der Scharniere 3 einerseits und den zweiten Teilen 7 der Scharniere 3 andererseits eingezogen sind, sodass jeweils die ersten Teile 6 der Scharniere 3 und die zweiten Teile 7 der Scharniere 3 gemeinsam relativ zueinander verschwenkbar sind. So wird die Stabilität des Signalkörpers 1 verbessert, ohne die leichte Montierbarkeit gemäß der Erfindung zu beeinträchtigen.

Besonders die zweite Ausführungsform ist so ausgelegt, dass das Zusammenbauen des Signalkörpers 1, also das Befestigen der Halbschalen 2 an den Scharnieren 3, besonders einfach mit wenigen Handgriffen geschehen kann. Dadurch kann der Signalkörper 1 einfach im zerlegten Zustand transportiert werden, wodurch beim Transport viel Platz gespart werden kann, was für die Logistik natürlich vorteilhaft sein kann.

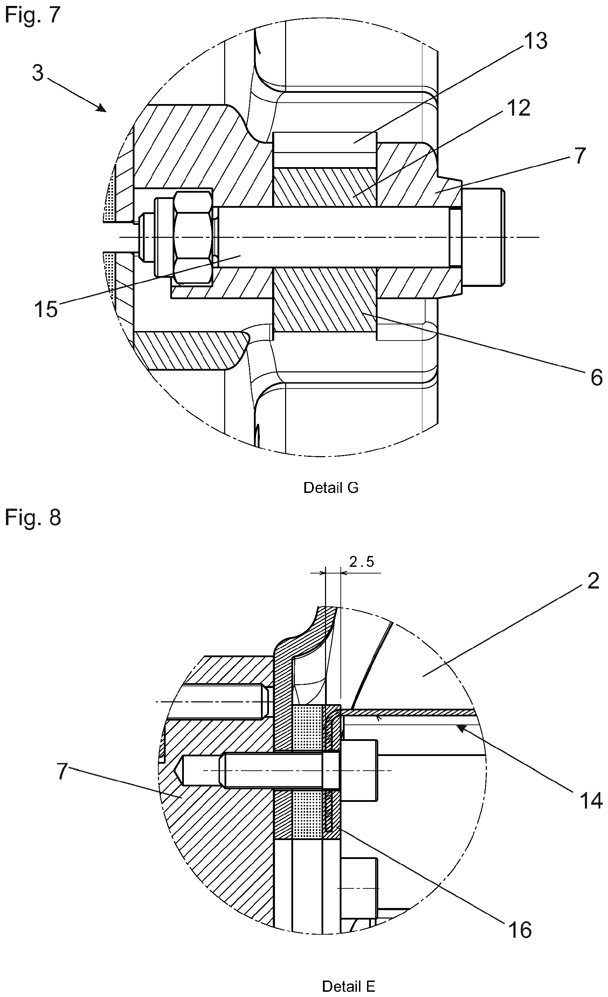

Fig. 7 zeigt das Detail G aus Fig. 2a (geöffnete Stellung), wobei sich die Lasche 12 nicht zur Gänze in der Ausnehmung 13 befindet und somit noch kein Reibschluss vorliegt.

Die Schwenkachse ist als selbstsichernde Schraube 15 ausgebildet, die über eine Körnung in Haltebacken gehalten wird.

Fig. 8 zeigt das Detail E aus Fig. 6a. Deutlich wird insbesondere die Befestigung der Halbschale 2 am zweiten Teil 7 der Scharniere 3 (analog für das erste Teil 6) und die Befestigung der Strebe 14.

Außerdem ist eine Dichtung 16 vorhanden, die in diesem Ausführungsbeispiel ein Setzverhalten von 2,5 mm aufweist.

Fig. 9 zeigt den vergrößerten Schnitt entlang der Ebene F-F aus Fig. 6a, wobei der Schnellverschluss 5 noch einmal vergrößert abgebildet ist. Die schwenkbare Lagerung des Riegels 8 ist mit einem Pfeil angedeutet.

Erkennbar ist, dass die Riegelaufnahme 10 als Leiste mit einer Leistenausnehmung ausgebildet ist.

Erkennbar ist in Fig. 9 außerdem eine Rampe 17, die zum Ein- und Aushaken der der Riegel dienlich ist und ein unerwünschtes Aushaken des Riegel 8 verhindert.

Durch die Rampe 17 des Schnellverschlusses 5 (in Zusammenwirkung mit der Feder) entsteht also ein Übertotpunkt, der eine einfache Montage und gleichzeitig den Absturz des Signalkörpers 1 verhindert.

Fig. 10a zeigt den Signalkörper 1 in einer perspektivischen Renderdarstellung, wobei das Freiseil durch die Öffnung im Zentrum des Signalkörpers 1 geführt ist und die Halbschalen 2 in der geschlossenen Stellung verriegelt sind, d.h. der Signalkörper 1 ist am Freiseil montiert.

Fig. 10b zeigt eine Renderdarstellung eines Scharniers 3, wie es bei den abgebildeten Ausführungsformen zum Einsatz kommt. In diesen Ausführungsbeispielen werden die Scharniere 3 durch Druckguss, vorzugsweise aus Aluminium, hergestellt. Durchaus denkbar ist es, die Scharniere 3 dabei mit Hohlräumen zu versehen, um das Gewicht zu reduzieren.

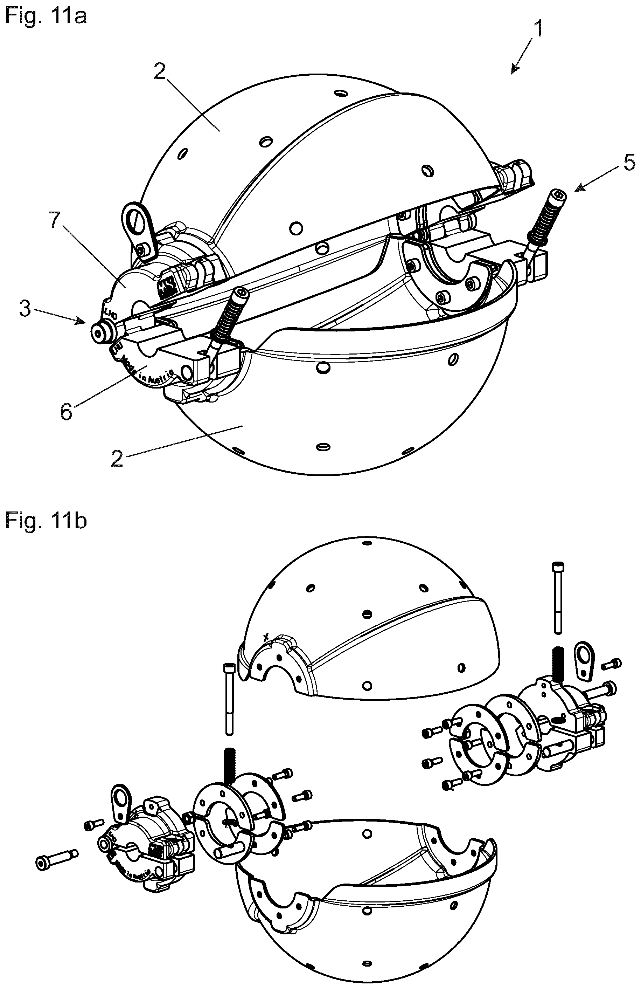

Fig. 11a zeigt die erste Ausführungsform in der geöffneten Stellung in perspektivischer Ansicht. Fig. 11b zeigt eine Explosionsdarstellung der ersten Ausführungsform, wobei der Übersichtlichkeit halber keine Bezugszeichen eingezeichnet wurden. Die Identität und Funktion der Bauteile ergeben sich aus den Fig. 1a, 1b, 2a, 2b, 3 und 4 sowie dem dazugehörigen Teil der obigen Figurenbeschreibung.

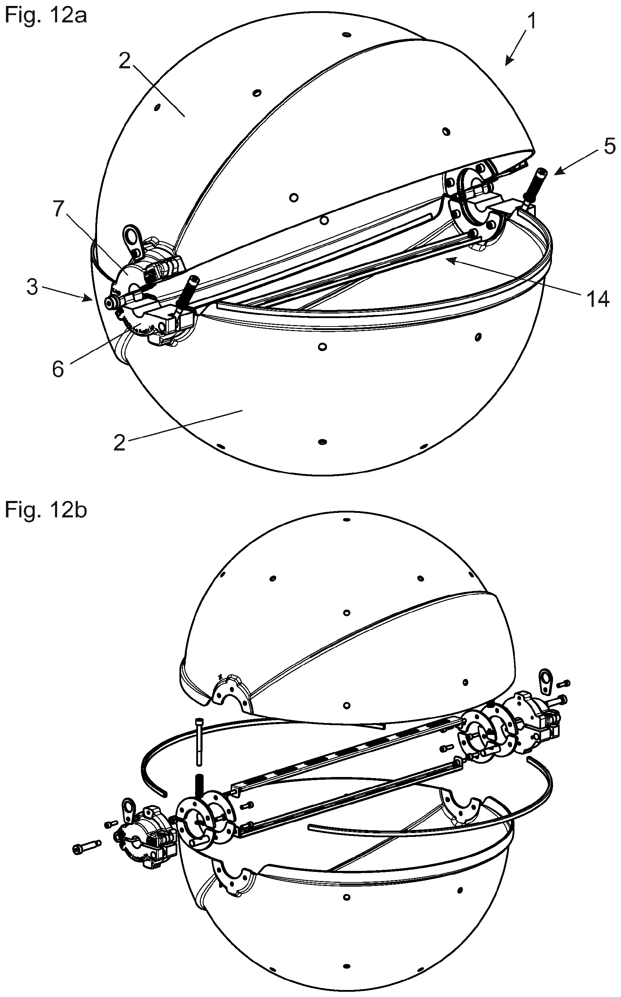

Fig. 12a und 12b zeigen die zweite Ausführungsform analog zu den Figuren 11a und 11b. Für die zweite Ausführungsform wird generell auf die Fig. 5a, 5b, 6a du 6b verwiesen.

Selbstverständlich sind durchaus weitere Ausführungsformen denkbar. Beispielsweise könnte der zumindest eine Anschlag 4 und/oder die zumindest eine Befestigungsvorrichtung gemäß der Erfindung statt an den Scharnierbauteilen an den Halbschalen 2 angeordnet sein. Das gilt selbstverständlich auch für den zumindest einen Schnellverschluss 5.

Es ist auch nicht notwendig (aber wie die obigen Ausführungsbeispiele zeigen, natürlich durchaus möglich), dass die Halbschalen 2 im Wesentlichen gleich ausgebildet sind. Beispielsweise könnte eine der Halbschalen 2 kleiner ausgebildet sein, um das ineinander Verschwenken der Halbschalen 2 ohne Änderung des Radius der Halbschalen 2 möglich zu machen. Prinzipiell wäre es auch möglich mehr als zwei Halbschalen 2 und/oder mehr als zwei Scharniere 3 zu verwenden.

### Bezugszeichenliste:

| | |
|---|---|
| Signalkörper | 1 |
| Halbschalen | 2 |
| Scharniere | 3 |
| Zumindest ein Anschlag | 4 |
| Zumindest ein Schnellverschluss | 5 |
| Erster Teil der Scharniere | 6 |
| Zweiter Teil der Scharniere | 7 |
| Riegel | 8 |
| Riegelfläche | 9 |
| Riegelaufnahme | 10 |
| Befestigungsvorrichtung | 11 |
| Lasche | 12 |
| Ausnehmung | 13 |
| Zumindest eine Strebe | 14 |
| Selbstsichernde Schraube | 15 |
| Dichtung | 16 |
| Rampe | 17 |

## Patentansprüche

1. Signalkörper, insbesondere Signalkugel, zum Befestigen an einem Freiseil mit zwei Halbschalen (2) und zwei Scharnieren (3), wobei die Halbschalen (2) so mit den Scharnieren (3) verbunden oder verbindbar sind, dass die Halbschalen (2) in einer geöffneten Stellung teilweise ineinander verschwenkt sind und in einer geschlossenen Stellung das Freiseil, umschließen, und wobei zumindest ein Anschlag (4) vorgesehen ist, der ausgehend von der geöffneten Stellung eine weitere Öffnungsbewegung der Halbschalen (2) hemmt, **dadurch gekennzeichnet, dass** der Signalkörper (1) von der Gewichtsverteilung her so ausgelegt ist, dass er in der geöffneten Stellung auf das Freiseil gelegt werden kann und sich dort selbst ausbalanciert.

2. Signalkörper nach Anspruch 1, **dadurch gekennzeichnet, dass** der zumindest eine Anschlag (4) in den Scharnieren (3) integriert ist, wobei zwei Anschläge (4) vorgesehen sind, die jeweils in eines der Scharniere (3) integriert sind.

3. Signalkörper nach einem der vorhergehenden Ansprüche, **dadurch gekennzeichnet, dass** die Halbschalen (2) durch die Scharniere (3) zwischen der geöffneten Stellung und der geschlossenen Stellung zueinander frei schwenkbar sind.

4. Signalkörper nach einem der vorhergehenden Ansprüche, **dadurch gekennzeichnet, dass** zum Verriegeln der Halbschalen (2) in der geschlossenen Stellung zumindest ein Schnellverschluss (5) vorgesehen ist, der aufweist:
- ein an einem ersten Teil (6) der Scharniere (3) schwenkbar befestigten Riegel (8) mit einer Riegelfläche (9) und
- eine an einem relativ zum ersten Teil (6) des Scharniers (3) schwenkbaren zweiten Teil (7) der Scharniere (3) angeordnete Riegelaufnahme (10), wobei die Halbschalen (2) durch Einschwenken des Riegels (8) in die Riegelaufnahme (10) und Zusammenwirken der Riegelfläche (9) mit der Riegelaufnahme (10) in der geschlossenen Stellung arretierbar sind.

5. Signalkörper nach Anspruch 4, **dadurch gekennzeichnet, dass** die Riegelfläche (9) federbelastet ist und/oder dass die Riegelaufnahme (10) als Leiste mit einer Leistenausnehmung zum Einschwenken des Riegels (8) ausgebildet ist, wobei die Leistenausnehmung eine geringere Größe, insbesondere einen geringeren Durchmesser, als die Riegelfläche (9) aufweist.

6. Signalkörper nach Anspruch 4 oder 5, **dadurch gekennzeichnet, dass** zwei Schnellverschlüsse (5) vorgesehen sind, die jeweils an einem der Scharniere (3) angeordnet sind.

7. Signalkörper nach einem der vorhergehenden Ansprüche, **dadurch gekennzeichnet, dass** eine Befestigungsvorrichtung (11) zum Festlegen der Halbschalen (2) durch Reibschluss in der geöffneten Stellung vorgesehen ist, wobei der Reibschluss zum Verbringen der Halbschalen (2) in die geschlossene Stellung durch einen Bediener überwindbar ist.

8. Signalkörper nach Anspruch 7, **dadurch gekennzeichnet, dass** die Befestigungsvorrichtung (11) am ersten Teil (6) der Scharniere (3) eine Lasche (12) und am zweiten Teil (7) der Scharniere (3) eine mit der Lasche (12) korrespondierende Ausnehmung (13) aufweist, wobei der Reibschluss durch Einschwenken der Lasche (12) in die korrespondierende Ausnehmung (13) entsteht.

9. Signalkörper nach einem der vorhergehenden Ansprüche, **dadurch gekennzeichnet, dass** die Halbschalen (2) aus einem in einer Signalfarbe eingefärbten Kunststoff gefertigt sind.

10. Signalkörper nach Anspruch 9, **dadurch gekennzeichnet, dass** die Signalfarbe Orange ist.

11. Signalkörper nach einem der vorhergehenden Ansprüche, **dadurch gekennzeichnet, dass** die Scharniere (3) im Inneren des Signalkörpers (1) über zumindest einer Strebe (14) in Verbindung stehen.

12. Signalkörper nach einem der vorhergehenden Ansprüche, **dadurch gekennzeichnet, dass** die Halbschalen (2) in der geschlossenen Stellung das Freiseil im Wesentlichen achsensymmetrisch umschließen.

## Claims

1. Signal device, in particular signal marker ball, for attachment to a free rope, comprising two half-shells (2) and two hinges (3) , wherein the half-shells (2) are connected or connectable to the hinges (3) such that the half-shells (2) are partially pivoted into one another in an open position and enclose the free rope in a closed position, and wherein at least one stop (4) is provided which, starting from the open position, prevents further opening movement of the half-shells (2), **characterized in that** the signal device (1) is designed in terms of weight distribution such that it can be placed on the free cable in the open position and balances itself there.

2. Signal device according to claim 1, **characterized in that** the at least one stop (4) is integrated into the hinges (3), wherein two stops (4) are provided, each of which is integrated into one of the hinges (3).

3. Signal device according to one of the preceding claims, **characterized in that** the half-shells (2) can be freely pivoted relative to each other between the open position and the closed position by means of the hinges (3).

4. Signal device according to one of the preceding claims, **characterized in that** at least one quick-release fastener (5) is provided for locking the half-shells (2) in the closed position, which fastener comprises:
- a bolt (8) pivotably attached to a first part (6) of the hinges (3) and having a bolt surface (9), and
- a bolt receptacle (10) arranged on a second part (7) of the hinges (3) which is pivotable relative to the first part (6) of the hinge (3), wherein the half-shells (2) can be locked in the closed position by pivoting the bolt (8) into the bolt receptacle (10) and by the bolt surface (9) cooperating with the bolt receptacle (10).

5. Signal device according to claim 4, **characterized in that** the bolt surface (9) is spring-loaded and/or **in that** the bolt receptacle (10) is designed as a strip with a strip recess for swivelling in the bolt (8), wherein the strip recess has a smaller size, in particular a smaller diameter, than the bolt surface (9).

6. Signal device according to claim 4 or 5, **characterized in that** two quick-release fasteners (5) are provided, each of which is arranged on one of the hinges (3).

7. Signal device according to one of the preceding claims, **characterized in that** a fastening device (11) is provided for securing the half-shells (2) by frictional engagement in the open position, wherein the frictional engagement can be overcome by an operator in order to move the half-shells (2) into the closed position.

8. Signal device according to claim 7, **characterized in that** the fastening device (11) has a latch (12) on the first part (6) of the hinges (3) and a recess (13) corresponding to the latch (12) on the second part (7) of the hinges (3), wherein the friction lock is created by swinging the latch (12) into the corresponding recess (13).

9. Signal device according to one of the preceding claims, **characterized in that** the half-shells (2) are made of a plastic colored in a signal color.

10. Signal device according to claim 9, **characterized in that** the signal color is orange.

11. Signal device according to one of the preceding claims, **characterized in that** the hinges (3) are connected inside the signal device (1) via at least one strut (14).

12. Signal device according to one of the preceding claims, **characterized in that** the half-shells (2) enclose the free cable in a substantially axially symmetrical manner in the closed position.

## Revendications

1. Corps de signalisation, en particulier sphère de signalisation, pour la fixation à un câble libre avec deux demi-coques (2) et deux charnières (3), dans lequel les demi-coques (2) sont reliées ou peuvent être reliées aux charnières (3) de sorte que les demi-coques (2) soient partiellement pivotées l'une dans l'autre dans une position ouverte et entourent le câble libre dans une position fermée, et dans lequel au moins une butée (4) est prévue, laquelle empêche, à partir de la position ouverte, un mouvement d'ouverture supplémentaire des demi-coques (2), **caractérisé en ce que** le corps de signalisation (1) est conçu depuis la répartition du poids de sorte à ce qu'il puisse être posé sur le câble libre en position ouverte et s'y équilibrer lui-même.

2. Corps de signalisation selon la revendication 1, **caractérisé en ce que** l'au moins une butée (4) est intégrée dans les charnières (3), dans lequel deux butées (4) sont prévues, lesquelles sont chacune intégrées dans l'une des charnières (3).

3. Corps de signalisation selon l'une quelconque des revendications précédentes, **caractérisé en ce que** les demi-coques (2) sont librement pivotantes l'une par rapport à l'autre entre la position ouverte et la position fermée par les charnières (3).

4. Corps de signalisation selon l'une quelconque des revendications précédentes, **caractérisé en ce que** pour verrouiller les demi-coques (2) en position fermée, il est prévu au moins une fermeture rapide (5) qui présente :
- un verrou (8) fixé de manière pivotante à une première partie (6) des charnières (3) avec une surface de verrou (9) et
- un logement de verrou (10) disposé au niveau d'une seconde partie (7) des charnières (3) pivotante par rapport à la première partie (6) de la charnière (3), dans lequel les demi-coques (2) peuvent être bloquées en position fermée par pivotement du verrou (8) dans le logement de verrou (10) et interaction de la surface de verrou (9) avec le logement de verrou (10).

5. Corps de signalisation selon la revendication 4, **caractérisé en ce que** la surface de verrou (9) est chargée par ressort et/ou **en ce que** le logement de verrou (10) est réalisé en tant que baguette avec un évidement de baguette pour le pivotement du verrou (8), dans lequel l'évidement de baguette présente une taille plus petite, en particulier un diamètre plus petit, que la surface de verrou (9).

6. Corps de signalisation selon la revendication 4 ou 5, **caractérisé en ce que** deux fermetures rapides (5) sont prévues, lesquelles sont disposées respectivement au niveau de l'une des charnières (3).

7. Corps de signalisation selon l'une quelconque des revendications précédentes, **caractérisé en ce qu'**un dispositif de fixation (11) est prévu pour fixer les demi-coques (2) par liaison par friction dans la position ouverte, dans lequel la liaison par friction pour amener les demi-coques (2) dans la position fermée peut être surmontée par un opérateur.

8. Corps de signalisation selon la revendication 7, **caractérisé en ce que** le dispositif de fixation (11) présente au niveau de la première partie (6) des charnières (3) une languette (12) et au niveau de la seconde partie (7) des charnières (3) un évidement (13) correspondant à la languette (12), dans lequel la liaison par friction est réalisée par pivotement de la languette (12) dans l'évidement (13) correspondant.

9. Corps de signalisation selon l'une quelconque des revendications précédentes, **caractérisé en ce que** les demi-coques (2) sont fabriquées en une matière plastique teintée dans une couleur de signalisation.

10. Corps de signalisation selon la revendication 9, **caractérisé en ce que** la couleur de signalisation est orange.

11. Corps de signalisation selon l'une quelconque des revendications précédentes, **caractérisé en ce que** les charnières (3) à l'intérieur du corps de signalisation (1) sont en liaison par le biais d'au moins une entretoise (14).

12. Corps de signalisation selon l'une quelconque des revendications précédentes, **caractérisé en ce que** les demi-coques (2) entourent le câble libre en position fermée sensiblement symétriquement par rapport à l'axe.
